# FASCICULE DE BREVET EUROPEEN

(11) **EP 2 257 209 B1**
(45) Date de publication et mention de la délivrance du brevet: **23.03.2016**
(21) Numéro de dépôt: 09735154.8
(22) Date de dépôt: 27.03.2009
(51) Int. Cl.: A47J 43/12

(54) **PROCEDE ET DISPOSITIF POUR LA REALISATION DE PREPARATIONS ALIMENTAIRES DE TYPE MOUSSE**
VERFAHREN UND VORRICHTUNG ZUR HERSTELLUNG MOUSSE-ÄHNLICHER LEBENSMITTELPRODUKTE
METHOD AND DEVICE FOR MAKING MOUSSE-LIKE FOOD PREPARATIONS

(30) Priorité: 27.03.2008 FR 0801667
(43) Date de publication de la demande: 08.12.2010
(73) Titulaire: SEB S.A., 69130 Ecully (FR)
(72) Inventeur: FERRER, Florent, F-65290 Juillan (FR); LEVY, Jérôme, F-92410 Ville d'Avray (FR)
(74) Mandataire: Cémeli, Eric Philippe Laurent
(86) Numéro de dépôt international: PCT/FR2009/000345
(87) Numéro de publication internationale: WO 2009/130408

(56) Documents cités:
- EP-A- 1 668 992
- US-A- 4 547 076
- US-A1- 2007 297 282

## Description

La présente invention concerne le domaine technique des appareils de préparation culinaire comportant un outil de travail rotatif agencé dans une chambre de travail.

La présente invention concerne la réalisation de préparations alimentaires de type mousse dans un appareil électrique de préparation culinaire, à partir d'ingrédients choisis.

Le foisonnement d'une préparation culinaire pour obtenir une mousse consiste à intégrer des bulles de gaz (air ou autre) dans une préparation pour obtenir un produit léger, volumineux, aéré. La préparation foisonnée la plus connue est la crème Chantilly, obtenue à partir de crème fraîche travaillée à froid à l'aide d'un fouet. Toutefois, l'obtention d'un bon résultat peut rester aléatoire.

Il est possible de trouver dans le commerce de la crème Chantilly prête à l'emploi dans un récipient sous pression. Toutefois, cette préparation est la principale préparation de type mousse disponible prête à l'emploi, sinon la seule.

Le document US 4 547 076 divulgue un appareil susceptible d'être utilisé pour foisonner des préparations initialement glacées. Cet appareil utilise un outil coupant entraîné en rotation selon un axe d'entraînement agencé verticalement, cet axe d'entraînement étant déplacé selon la direction axiale de manière à ce que l'outil coupant entaille la surface d'un bloc de préparation congelée pour réaliser des copeaux. L'outil coupant et le bloc de préparation congelée sont agencés dans une enceinte pressurisée. La dépressurisation permet d'obtenir le foisonnement de la préparation. Un inconvénient de l'appareil décrit dans ce document réside dans son utilisation limitée à des préparations initialement glacées. Cet appareil est de plus relativement onéreux. En outre, cet appareil ne permet pas de conserver des morceaux dans la préparation, et l'utilisateur ne peut visualiser la préparation en cours de réalisation. Un appareil de type voisin est connu du document WO 2006 043 298, cet appareil différant de l'appareil du document précédent en ce que la chambre de travail contenant la préparation initialement glacée est déplacée axialement vers l'outil coupant entraîné en rotation.

Les siphons utilisant une cartouche de gaz tel que N₂O ou CO₂ permettent de réaliser différentes sortes de mousses, mais aussi des sodas. Toutefois, une préparation initiale filtrée et de texture adaptée (ni trop liquide, ni trop solide) est nécessaire. Un secouage énergique est nécessaire pour accélérer la dilution du gaz dans la préparation. Un tel dispositif permet également de réaliser différents types de préparations. Toutefois, cet appareil ne permet pas de conserver des morceaux dans la préparation finale, la préparation initiale doit être filtrée. L'utilisateur ne peut pas non plus visualiser la préparation en cours de réalisation. De plus, le nettoyage de ce dispositif est compliqué.

Un but de la présente invention est de proposer un procédé de réalisation de préparations alimentaires de type mousse de bonne qualité, avec des ingrédients choisis, rapidement et sans effort.

Un autre but de la présente invention est de proposer un procédé de réalisation de préparations alimentaires de type mousse comportant des particules solides, telles que par exemple pépites ou copeaux.

Un autre but de la présente invention est de proposer un appareil électrique de préparation culinaire permettant de réaliser des préparations alimentaires de type mousse de bonne qualité, avec des ingrédients choisis, rapidement et sans effort.

Un autre but de la présente invention est de proposer un appareil électrique de préparation culinaire permettant de réaliser des préparations alimentaires de type mousse comportant des particules solides, telles que par exemple pépites ou copeaux.

Ces buts sont atteints avec un procédé de réalisation de préparations alimentaires foisonnées à partir d'un ou plusieurs ingrédient(s) dans un appareil électrique de préparation culinaire comportant un outil de travail rotatif agencé dans une chambre de travail, comprenant les étapes suivantes :
- introduire le ou les ingrédient(s) dans la chambre de travail par une ouverture de remplissage,
- fermer de manière étanche la chambre de travail,
- mettre sous pression la chambre de travail en introduisant du gaz comportant du CO₂ et/ou du N₂O,
- mixer le ou les ingrédient(s) à l'aide de l'outil de travail rotatif,
- décompresser la chambre de travail par un passage vers l'extérieur de la chambre de travail distinct de l'ouverture de remplissage,
- ouvrir la chambre de travail.

Ainsi, l'utilisateur peut réaliser une préparation foisonnée de type mousse à partir d'ingrédient(s) choisi(s). Cette préparation peut être obtenue rapidement et sans effort, du fait de l'incorporation de gaz sous pression dans la chambre de travail. L'outil de travail rotatif permet à la fois de mélanger et/ou diviser le ou les ingrédient(s) et de contribuer au foisonnement de la préparation en brassant ladite préparation dans l'atmosphère pressurisée de la chambre de travail. Des préparations alimentaires de type mousse de bonne qualité, présentant une structure fine et homogène, peuvent ainsi être obtenues. Le procédé présente en outre l'avantage de pouvoir conserver dans la préparation des particules solides de taille macroscopique, formant des inclusions dans la préparation.

Avantageusement, le ou les ingrédient(s) sont introduits autour et/ou au-dessus de l'outil de travail rotatif agencé dans la chambre de travail. Cette disposition rend la réalisation de la préparation particulièrement simple.

Avantageusement, l'outil de travail rotatif utilisé pour mixer le ou les ingrédient(s) est coupant. Cette disposition permet d'utiliser des préparations initiales de textures variées, l'outil de travail coupant permettant de diviser le ou les ingrédient(s) plus ou moins finement. En alternative, un outil de travail non coupant peut être utilisé pour des préparations initiales présentant des textures ne nécessitant pas une division des aliments pour obtenir le foisonnement recherché.

Avantageusement, l'outil de travail rotatif est utilisé pour mixer le ou les ingrédient(s) à une vitesse de rotation supérieure à 1000 tours/min. Cette disposition permet d'obtenir des préparations particulièrement fines et homogènes.

Avantageusement, la pression dans la chambre de travail atteint une valeur comprise entre 1,5 et 2,5 bars. Cette plage de pression constitue un bon compromis entre une pression minimale permettant d'obtenir une bonne qualité de préparation et une pression maximale permettant d'obtenir un procédé de réalisation de préparations alimentaires foisonnées qui reste simple à utiliser.

Avantageusement, la chambre de travail est mise sous pression en introduisant du gaz issu d'une cartouche de gaz comprimé. Cette disposition permet de simplifier la mise sous pression de la chambre de travail.

Avantageusement alors, la cartouche de gaz comprimé est à usage unique. Cette disposition permet de simplifier les manipulations de l'utilisateur.

Selon une disposition avantageuse pour la réalisation de mousses de préparations salées, notamment de légumes, le gaz introduit dans la chambre de travail comporte au moins 50% de N₂O.

Selon une disposition avantageuse pour la réalisation de mousses de préparations sucrées, notamment de fruits, le gaz introduit dans la chambre de travail comporte au moins 50% de CO₂.

Ces buts sont atteints également avec un appareil électrique de préparation culinaire comportant un moteur entraînant un outil de travail rotatif agencé dans une chambre de travail comportant une ouverture de remplissage et des moyens de fermeture étanche, ledit appareil comportant des moyens d'introduction de gaz sous pression dans la chambre de travail ainsi que des moyens de décompression de la chambre de travail, du fait que les moyens de décompression définissent un passage vers l'extérieur de la chambre de travail distinct de l'ouverture de remplissage de la chambre de travail. Ces dispositions permettent de réaliser un appareil prévu pour une utilisation domestique voire semi professionnelle ou professionnelle, qui présente une utilisation simple, tout en permettant de réaliser des préparations foisonnées variées avec une bonne qualité de résultat.

Avantageusement, ledit appareil comporte des moyens de réception d'une cartouche de gaz comprimé prévue pour mettre sous pression la chambre de travail. Cette disposition permet de faciliter la manipulation de l'appareil. Avantageusement alors, la cartouche de gaz comprimé est à usage unique.

Avantageusement, l'outil de travail rotatif est entraîné par le moteur à une vitesse de rotation supérieure à 1000 tours/min. Cette disposition permet d'obtenir des préparations particulièrement aérées, fines et bien mélangées.

Avantageusement, l'outil de travail rotatif est coupant. Cette disposition permet d'utiliser des préparations initiales de textures variées pour obtenir des préparations foisonnées. Cette disposition permet également d'utiliser l'appareil pour réaliser des préparations non foisonnées, en mixant simplement le ou les ingrédient(s), pas nécessairement filtrées, divisées ou texturées pour obtenir un foisonnement par simple brassage. En alternative, un outil de travail rotatif non coupant peut être utilisé avec des préparations initiales de texture appropriée.

Selon une forme de réalisation avantageuse, la chambre de travail comprend un récipient de travail fermé par un couvercle. Cette disposition permet notamment de recueillir la préparation foisonnée dans le récipient de travail.

Selon une forme de réalisation préférée, le couvercle ferme l'ouverture de remplissage. Cette disposition permet de simplifier la construction et l'utilisation de l'appareil.

Selon une forme de réalisation préférée, le passage vers l'extérieur de la chambre de travail est ménagé dans le couvercle. Cette disposition permet aussi de simplifier la construction et l'utilisation de l'appareil.

Selon une forme de réalisation préférée, l'outil de travail rotatif est entraîné par un axe de transmission monté dans un fond du récipient de travail. Cette disposition permet de disposer le récipient de travail sur un socle d'entraînement.

Ainsi, selon un mode de réalisation, l'outil de travail rotatif est entraîné par le dessous. L'utilisateur peut ainsi accéder à la chambre de travail en retirant le couvercle.

Alors, selon un autre mode de réalisation, l'outil de travail rotatif est entraîné par le dessus. Cette disposition peut convenir notamment pour des appareils de plus petite taille, le boîtier moteur pouvant si désiré former le couvercle de la chambre de travail.

Avantageusement, ledit appareil est spécialement conçu pour la mise en oeuvre du procédé du type précité.

L'invention sera mieux comprise à l'étude d'un exemple de réalisation, pris à titre nullement limitatif, illustré dans les figures annexées, dans lesquelles :
- la figure 1 est une vue en perspective d'un appareil électroménager de préparation culinaire selon l'invention,
- la figure 2 est une vue schématique en coupe transversale de l'appareil électroménager de préparation culinaire illustré sur la figure 1.

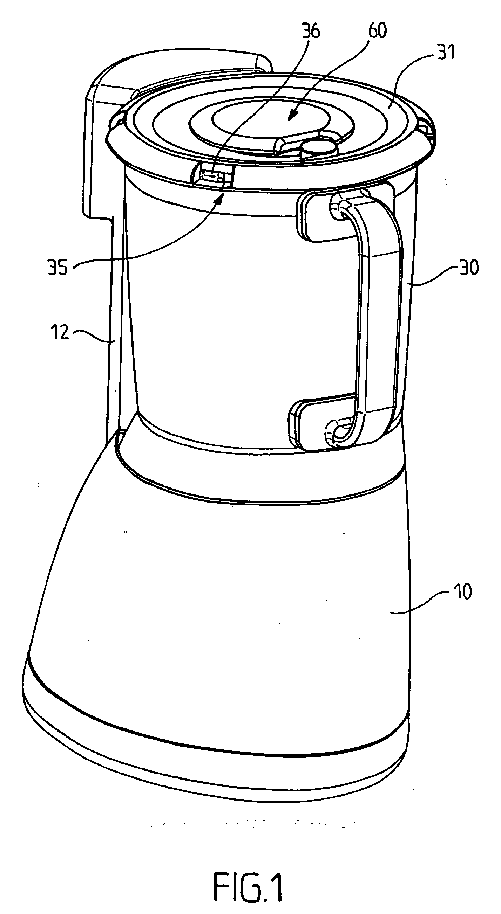

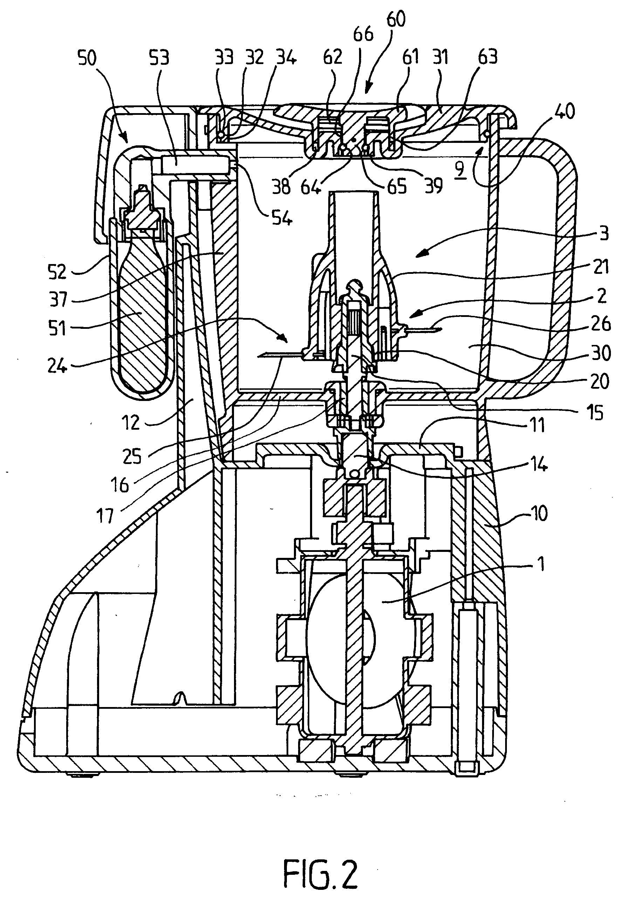

L'appareil électroménager de préparation culinaire illustré sur les figures 1 et 2 est un appareil électrique de préparation culinaire comportant un moteur 1 entraînant un outil de travail rotatif 2 agencé dans une chambre de travail 3.

Le moteur 1 est logé dans un boîtier 10 formant un socle 11 prévu pour recevoir un récipient 30 appartenant à la chambre de travail 3. Le boîtier 10 présente un montant 12 s'élevant à côté du socle 11. Un organe d'entraînement 14 entraîné par le moteur 1 est agencé dans le socle 11.

L'outil de travail rotatif 2 présente une extrémité d'entraînement 20 inférieure prévue pour coopérer avec l'organe d'entraînement 14. Ainsi, l'outil de travail rotatif 2 est entraîné par le dessous. L'extrémité d'entraînement 20 appartient à un moyeu 21. L'outil de travail rotatif 2 présente des organes de coupe 24 formés par deux lames 25, 26. Ainsi, l'outil de travail rotatif 2 est coupant. Le moyeu 21 est avantageusement surmoulé sur les lames 25, 26.

Tel que bien visible sur la figure 2, l'outil de travail rotatif 2 est entraîné par un axe de transmission 15 monté dans un fond 16 du récipient de travail 30. Plus particulièrement, l'axe de transmission 15 est inséré dans un palier 17 traversant le fond 16 du récipient de travail 30.

La chambre de travail 3 comprend le récipient de travail 30 fermé par un couvercle 31. Le récipient de travail 30 est avantageusement réalisé en matériau transparent ou translucide.

Tel que bien visible sur la figure 2, la chambre de travail 3 comporte une ouverture de remplissage 9. Le couvercle 31 ferme l'ouverture de remplissage 9.

Avantageusement, au moins un joint annulaire d'étanchéité 32 est monté entre le récipient de travail 30 et le couvercle 31. Tel que représenté sur la figure 2, le joint annulaire d'étanchéité 32 est logé dans une gorge extérieure 33 d'une collerette inférieure 34 du couvercle 31.

Le récipient de travail 30 et le couvercle 31 comportent des moyens de verrouillage 35 tels que par exemple des moyens de verrouillage à baïonnette 36, visibles sur la figure 1.

Ainsi, la chambre de travail 3 comporte des moyens de fermeture étanche 40 formés par le joint annulaire d'étanchéité 32 et les moyens de verrouillage 35.

L'appareil comporte des moyens d'introduction de gaz sous pression 50 dans la chambre de travail 3 ainsi que des moyens de décompression 60 de la chambre de travail 3.

Les moyens d'introduction de gaz sous pression 50 peuvent être conçus pour recevoir une cartouche de gaz comprimé 51, visible sur la figure 2. Le gaz utilisé pour la réalisation de préparations foisonnées comporte usuellement du CO₂ et/ou du N₂O. A cet effet, l'appareil comporte des moyens de réception 52 de la cartouche de gaz comprimé 51 prévue pour mettre sous pression la chambre de travail 3. Les moyens de réception 52 sont reliés à un conduit 53 débouchant dans une ouverture 54 de la chambre de travail 3. Plus particulièrement, le conduit 53 est agencé dans le montant 12 ; les moyens de réception 52 sont vissés à une extrémité du conduit 53 ; l'ouverture 54 est ménagée dans une paroi latérale 37 du récipient de travail 3.

Les moyens de décompression 60 sont avantageusement montés dans le couvercle 31. Tel que représenté sur la figure 1, les moyens de décompression comprennent un organe de commande 61 monté mobile contre un ressort de rappel 62, des moyens de guidage 63 montés coulissants dans une gorge 38 du couvercle 31, et un joint d'étanchéité 64 agencé autour d'un tenon 65 engagé dans une cheminée 39 du couvercle 31.

L'appareil selon l'invention permet de mettre en oeuvre un procédé de réalisation de préparations alimentaires foisonnées à partir d'un ou plusieurs ingrédient(s), comprenant les étapes suivantes :
- introduire le ou les ingrédient(s) dans la chambre de travail 3 par une ouverture de remplissage 9,
- fermer de manière étanche la chambre de travail 3,
- mettre sous pression la chambre de travail 3 en introduisant du gaz comportant du CO₂ et/ou du N₂O,
- mixer le ou les ingrédient(s) à l'aide de l'outil de travail rotatif 2,
- décompresser la chambre de travail 3 par un passage 66 vers l'extérieur de la chambre de travail 3 distinct de l'ouverture de remplissage 9,
- ouvrir la chambre de travail 3.

De préférence, la chambre de travail 3 est mise sous pression en introduisant du gaz issu d'une cartouche de gaz comprimé. Selon une forme de réalisation avantageuse, la cartouche de gaz comprimé 51 utilisée est à usage unique.

La pression dans la chambre de travail 3 atteint préférentiellement une valeur comprise entre 1,5 et 2,5 bars.

De préférence, l'outil de travail rotatif 2 est entraîné par le moteur 1 à une vitesse de rotation supérieure à 1000 tours/min.

Le mixage sous pression permet de transformer la préparation initialement introduite dans la chambre de travail 3. La décompression de la chambre de travail 3 permet d'obtenir le foisonnement de la préparation. A cet effet, l'utilisateur appuie sur l'organe de commande 61. Le tenon 65 descend dans la cheminée 39 et le joint d'étanchéité 64 libère un passage 66 vers l'extérieur de la chambre de travail 3. Ainsi, les moyens de décompression 60 définissent le passage 66 vers l'extérieur de la chambre de travail 3.

Tel que bien visible sur la figure 2, le passage 66 vers l'extérieur de la chambre de travail 3 est distinct de l'ouverture de remplissage 9 de la chambre de travail 3. Plus particulièrement, le passage 66 vers l'extérieur de la chambre de travail 3 est ménagé dans le couvercle 31.

L'appareil électrique de préparation culinaire selon l'invention spécialement conçu pour la mise en oeuvre du procédé précité permet de réaliser des préparations foisonnées à partir d'ingrédients variés, sans contraintes excessives sur la réalisation de la préparation initiale à introduire dans la chambre de travail 3.

L'outil de travail rotatif 2 utilisé pour mixer le ou les ingrédient(s) à une vitesse de rotation supérieure à 1000 tours/min permet d'obtenir non seulement un brassage de la préparation initiale, mais aussi une évolution de la structure de la préparation, en éclatant ou en divisant au moins une partie des ingrédients solides initialement présents dans la préparation.

Notamment, l'outil de travail rotatif 2 coupant utilisé pour mixer le ou les ingrédient(s) permet de partir d'ingrédients préalablement peu ou pas travaillés.

A titre de variante, l'outil de travail rotatif 2 pourrait comporter des organes de brassage en complément et/ou en substitution aux organes de coupe 24. Si désiré, les organes de brassage peuvent être indépendants des organes de coupe.

A titre de variante, l'outil de travail rotatif 2 pourrait être entraîné par le dessus. En d'autres termes, l'outil de travail rotatif présente alors une extrémité d'entraînement supérieure.

A titre de variante, d'autres moyens de verrouillage pourraient être envisagés pour solidariser le récipient de travail 30 et le couvercle 31, notamment des moyens de verrouillage à vis.

A titre de variante, le passage 66 vers l'extérieur de la chambre de travail n'est pas nécessairement ménagé dans le couvercle 31.

A titre de variante, l'ouverture de remplissage 9 de la chambre de travail 3 n'est pas nécessairement fermée par un couvercle.

A titre de variante, la chambre de travail 3 ne comprend pas nécessairement un récipient de travail fermé par un couvercle.

La présente invention n'est nullement limitée à l'exemple de réalisation décrit et à ses variantes, mais englobe de nombreuses modifications dans le cadre des revendications.

## Revendications

1. Procédé de réalisation de préparations alimentaires foisonnées à partir d'un ou plusieurs ingrédient(s) dans un appareil électrique de préparation culinaire comportant un outil de travail rotatif (2) agencé dans une chambre de travail (3), comprenant les étapes suivantes :
- introduire le ou les ingrédient(s) dans la chambre de travail (3) par une ouverture de remplissage (9),
- fermer de manière étanche la chambre de travail (3),
- mettre sous pression la chambre de travail (3) en introduisant du gaz comportant du CO₂ et/ou du N₂O,
- mixer le ou les ingrédient(s) à l'aide de l'outil de travail rotatif (2),
- décompresser la chambre de travail (3) par un passage (66) vers l'extérieur de la chambre de travail (3) distinct de l'ouverture de remplissage (9).
- ouvrir la chambre de travail (3).

2. Procédé selon la revendication 1, **caractérisé en ce que** le ou les ingrédient(s) sont introduits autour et/ou au-dessus de l'outil de travail rotatif (2) agencé dans la chambre de travail (3).

3. Procédé selon l'une des revendications 1 ou 2, **caractérisé en ce que** l'outil de travail rotatif (2) utilisé pour mixer le ou les ingrédient(s) est coupant.

4. Procédé selon l'une des revendications 1 à 3, **caractérisé en ce que** l'outil de travail rotatif (2) est utilisé pour mixer le ou les ingrédient(s) à une vitesse de rotation supérieure à 1000 tours/min.

5. Procédé selon l'une des revendications 1 à 4, **caractérisé en ce que** la pression dans la chambre de travail (3) atteint une valeur comprise entre 1,5 et 2,5 bars.

6. Procédé selon l'une des revendications 1 à 5, **caractérisé en ce que** la chambre de travail (3) est mise sous pression en introduisant du gaz issu d'une cartouche de gaz comprimé.

7. Procédé selon la revendication 6, **caractérisé en ce que** la cartouche de gaz comprimé est à usage unique.

8. Procédé selon l'une des revendications 1 à 7, **caractérisé en ce que** le gaz introduit dans la chambre de travail comporte au moins 50% de N₂O.

9. Procédé selon l'une des revendications 1 à 8, **caractérisé en ce que** le gaz introduit dans la chambre de travail comporte au moins 50% de CO₂.

10. Appareil électrique de préparation culinaire comportant un moteur entraînant un outil de travail rotatif (2) agencé dans une chambre de travail (3) comportant une ouverture de remplissage (9) et des moyens de fermeture étanche (40), ledit appareil comportant des moyens d'introduction de gaz sous pression (50) dans la chambre de travail (3) ainsi que des moyens de décompression (60) de la chambre de travail (3), **caractérisé en ce que** les moyens de décompression (60) définissent un passage (66) vers l'extérieur de la chambre de travail (3) distinct de l'ouverture de remplissage (9) de la chambre de travail (3).

11. Appareil électrique de préparation culinaire selon la revendication 10, **caractérisé en ce qu'**il comporte des moyens de réception (52) d'une cartouche de gaz comprimé (51) prévue pour mettre sous pression la chambre de travail (3).

12. Appareil électrique de préparation culinaire selon l'une des revendications 10 ou 11, **caractérisé en ce que** l'outil de travail rotatif (2) est entraîné par le moteur (1) à une vitesse de rotation supérieure à 1000 tours/min.

13. Appareil électrique de préparation culinaire selon l'une des revendications 10 à 12, **caractérisé en ce que** l'outil de travail rotatif (2) est coupant.

14. Appareil électrique de préparation culinaire selon l'une des revendications 10 à 13, **caractérisé en ce que** la chambre de travail (3) comprend un récipient de travail (30) fermé par un couvercle (31), **en ce que** le couvercle (31) ferme l'ouverture de remplissage (9), et **en ce que** le passage (66) vers l'extérieur de la chambre de travail (3) est ménagé dans le couvercle (31).

15. Appareil électrique de préparation culinaire selon l'une des revendications 10 à 14 , **caractérisé en ce qu'**il est spécialement conçu pour la mise en oeuvre du procédé selon l'une des revendications 1 à 9.

## Patentansprüche

1. Verfahren zur Herstellung von schaumig geschlagenen Nahrungsmittelzubereitungen aus einer oder mehreren Zutat(en) in einem elektrischen Gerät für die Zubereitung von Speisen, das ein drehendes Arbeitswerkzeug (2) umfasst, das in einer Arbeitskammer (3) angeordnet ist, wobei das Verfahren die folgenden Schritte umfasst:
- die Zutat oder Zutaten durch eine Einfüllöffnung (9) in die Arbeitskammer (3) einfüllen,
- die Arbeitskammer (3) dicht schließen,
- die Arbeitskammer (3) durch das Einleiten von Gas bestehend aus CO₂ und/oder N₂O mit Druck beaufschlagen,
- die Zutat oder Zutaten mithilfe des drehenden Arbeitswerkzeugs (2) mixen,
- den Druck in der Arbeitskammer (3) über einen Durchlass (66) zur Außenseite der Arbeitskammer (3), der sich von der Einfüllöffnung (9) unterscheidet, ablassen,
- die Arbeitskammer (3) öffnen.

2. Verfahren nach Anspruch 1, **dadurch gekennzeichnet, dass** die Zutat oder die Zutaten um das und/oder über dem in der Arbeitskammer (3) angeordneten drehenden Arbeitswerkzeug (2) eingefüllt wird/werden.

3. Verfahren nach einem der Ansprüche 1 oder 2, **dadurch gekennzeichnet, dass** das zum Mixen der Zutat oder Zutaten verwendete drehende Arbeitswerkzeug (2) schneidend ist.

4. Verfahren nach einem der Ansprüche 1 bis 3, **dadurch gekennzeichnet, dass** das zum Mixen der Zutat oder Zutaten verwendete drehende Arbeitswerkzeug (2) eine Drehgeschwindigkeit von über 1000 U/min hat.

5. Verfahren nach einem der Ansprüche 1 bis 4, **dadurch gekennzeichnet, dass** der Druck in der Arbeitskammer (3) einen Wert zwischen 1,5 und 2,5 bar erreicht.

6. Verfahren nach einem der Ansprüche 1 bis 5, **dadurch gekennzeichnet, dass** die Arbeitskammer (3) mit Druck beaufschlagt wird, indem Gas aus einer Druckgaspatrone eingeleitet wird.

7. Verfahren nach Anspruch 6, **dadurch gekennzeichnet, dass** die Druckgaspatrone eine Einwegpatrone ist.

8. Verfahren nach einem der Ansprüche 1 bis 7, **dadurch gekennzeichnet, dass** das in die Arbeitskammer eingeleitete Gas mindestens 50 % N₂O enthält.

9. Verfahren nach einem der Ansprüche 1 bis 8, **dadurch gekennzeichnet, dass** das in die Arbeitskammer eingeleitete Gas mindestens 50 % CO₂ enthält.

10. Elektrisches Gerät für die Zubereitung von Speisen mit einem Motor, der ein drehendes Arbeitswerkzeug (2) antreibt, das in einer Arbeitskammer (3) angeordnet ist, die eine Einfüllöffnung (9) und Mittel (40) zum dichten Schließen umfasst, wobei das genannte Gerät Mittel (50) zum Einleiten von unter Druck stehendem Gas in die Arbeitskammer (3) sowie Mittel (60) zum Ablassen des Druckes in der Arbeitskammer (3) umfasst, **dadurch gekennzeichnet, dass** die Mittel (60) zum Ablassen des Druckes einen Durchlass (66) zur Außenseite der Arbeitskammer (3) definieren, der sich von der Einfüllöffnung (9) der Arbeitskammer (3) unterscheidet.

11. Elektrisches Gerät für die Zubereitung von Speisen nach Anspruch 10, **dadurch gekennzeichnet, dass** es Mittel (52) zur Aufnahme einer Druckgaspatrone (51) aufweist, die dafür vorgesehen ist, die Arbeitskammer (3) mit Druck zu beaufschlagen.

12. Elektrisches Gerät für die Zubereitung von Speisen nach einem der Ansprüche 10 oder 11, **dadurch gekennzeichnet, dass** das drehende Arbeitswerkzeug (2) von dem Motor (1) mit einer Drehgeschwindigkeit von über 1000 U/min angetrieben wird.

13. Elektrisches Gerät für die Zubereitung von Speisen nach einem der Ansprüche 10 bis 12, **dadurch gekennzeichnet, dass** das drehende Arbeitswerkzeug (2) schneidend ist.

14. Elektrisches Gerät für die Zubereitung von Speisen nach einem der Ansprüche 10 bis 13, **dadurch gekennzeichnet, dass** die Arbeitskammer (3) ein Arbeitsgefäß (30) umfasst, das durch einen Deckel (31) verschlossen ist, dass der Deckel (31) die Einfüllöffnung (9) verschließt und dass der Durchlass (66) zur Außenseite der Arbeitskammer (3) im Deckel (31) ausgebildet ist.

15. Elektrisches Gerät für die Zubereitung von Speisen nach einem der Ansprüche 10 bis 14, **dadurch gekennzeichnet, dass** es insbesondere für die Durchführung des Verfahrens nach einem der Ansprüche 1 bis 9 ausgelegt ist.

## Claims

1. Method for making foamed food preparations from one or more ingredients in an electric food preparation appliance comprising a rotary working tool (2) arranged in a working chamber (3), comprising the following steps:
- feeding the ingredient(s) into the working chamber (3) through a filling opening (9),
- tightly closing the working chamber (3),
- pressurising the working chamber (3) by feeding gas containing CO₂ and/or N₂O,
- mixing the ingredient(s) using the rotary working tool (2),
- depressurising the working chamber (3) through a passage (66) to the outside of the working chamber (3) different from the filling opening (9),
- opening the working chamber (3).

2. Method according to claim 1, **characterised in that** the ingredient(s) are fed around and/or above the rotary working tool (2) arranged in the working chamber (3).

3. Method according to claim 1 or 2, **characterised in that** the rotary working tool (2) used to mix the ingredient(s) is sharp.

4. Method according to one of claims 1 to 3, **characterised in that** the rotary working tool (2) is used to mix the ingredient(s) at a rotational speed greater than 1000 r.p.m.

5. Method according to one of claims 1 to 4, **characterised in that** the pressure in the working chamber (3) reaches a value of between 1.5 and 2.5 bar.

6. Method according to one of claims 1 to 5, **characterised in that** the working chamber (3) is pressurised by introducing gas from a compressed gas cartridge.

7. Method according to claim 6, **characterised in that** the compressed gas cartridge is disposable.

8. Method according to one of claims 1 to 7, **characterised in that** the gas introduced into the working chamber contains at least 50 % N₂O.

9. Method according to one of claims 1 to 8, **characterised in that** the gas introduced into the working chamber contains at least 50 % CO₂.

10. Electric food preparation appliance comprising a motor driving a rotary working tool (2) arranged in a working chamber (3) having a filling opening (9) and leaktight closure means (40), said appliance having means for introducing pressurised gas (50) into the working chamber (3) and means (60) for depressurising the working chamber (3), **characterised in that** the depressurising means (60) define a passage (66) to the outside of the working chamber (3) different from the filling opening (9) of the working chamber (3).

11. Electric food preparation appliance according to claim 10, **characterised in that** it includes means (52) for receiving a compressed gas cartridge (51) designed to pressurise the working chamber (3).

12. Electric food preparation appliance according to claim 10 or 11, **characterised in that** the rotary working tool (2) is driven by the motor (1) at a rotational speed greater than 1000 r.p.m.

13. Electric food preparation appliance according to one of claims 10 to 12, **characterised in that** the rotary working tool (2) is sharp.

14. Electric food preparation appliance according to one of claims 10 to 13, **characterised in that** the working chamber (3) comprises a working container (30) closed by a lid (31), **in that** the lid (31) closes the filling opening (9) and **in that** the passage (66) to the outside of the working chamber (3) is formed in the lid (31).

15. Electric food preparation appliance according to one of claims 10 to 14, **characterised in that** it is especially designed for implementing the method according to one of claims 1 to 9.
